# EUROPEAN PATENT SPECIFICATION

(11) **EP 2 964 383 B1**
(45) Date of publication and mention of the grant of the patent: **11.05.2022**
(21) Application number: 14760404.5
(22) Date of filing: 06.03.2014
(51) Int. Cl.: B01J 23/889, B01D 53/62, B01D 53/86, B01J 37/02, B01J 37/03, B01J 35/04

(54) **BASE METAL CATALYST AND METHOD OF USING SAME**
BASISMETALLKATALYSATOR UND VERFAHREN ZU DESSEN VERWENDUNG
CATALYSEUR MÉTALLIQUE DE BASE ET SON PROCÉDÉ D'UTILISATION

(30) Priority: 08.03.2013 US 201313790504
(43) Date of publication of application: 13.01.2016
(73) Proprietor: BASF Corporation, Florham Park, NJ 07932 (US)
(72) Inventor: ALDEN, Laif, R., Feasterville, PA 19053 (US); BUELOW, Mark, T., Phillipsburg, NJ 08865 (US); LAPADULA, Gerard, D., New York, NY 10001 (US); TRAN, Pascaline, Harrison, Holmdel, NJ 07733 (US); PHAM, Tiep, Old Bridge, NJ 08857 (US); FURBECK, Howard, Hamilton, NJ 08690 (US); ROMANSKI, Francis, S., Whippany, NJ 07981 (US)
(74) Representative: Lux, Berthold
(86) International application number: PCT/US2014/021200
(87) International publication number: WO 2014/138397

(56) References cited:
- EP-A1- 1 504 805
- CN-A- 101 954 286
- CN-A- 102 247 867
- KR-A- 20050 069 178
- US-A1- 2006 229 476
- US-A1- 2008 112 871
- US-A1- 2010 266 473
- TING-YI LI ET AL: "Catalytic oxidation of benzene over CuO/CeMnOcatalysts", APPLIED CATALYSIS B: ENVIRONMENTAL, ELSEVIER, AMSTERDAM, NL, vol. 103, no. 1, 9 January 2011 (2011-01-09), pages 143-148, XP028153912, ISSN: 0926-3373, DOI: 10.1016/J.APCATB.2011.01.020 [retrieved on 2011-01-15]
- PRADEEP DOGGALI ET AL: "Combustion of volatile organic compounds over CuMn based mixed oxide type catalysts supported on mesoporous AlO, TiOand ZrO", JOURNAL OF MOLECULAR CATALYSIS A: CHEMICAL, ELSEVIER, AMSTERDAM, NL, vol. 358, 6 February 2012 (2012-02-06), pages 23-30, XP028420243, ISSN: 1381-1169, DOI: 10.1016/J.MOLCATA.2012.02.004 [retrieved on 2012-02-28]
- VU V H ET AL: "Removal of hazardous chlorinated VOCs over Mn-Cu mixed oxide based catalyst", JOURNAL OF HAZARDOUS MATERIALS, ELSEVIER, AMSTERDAM, NL, vol. 169, no. 1-3, 30 September 2009 (2009-09-30), pages 758-765, XP026282731, ISSN: 0304-3894, DOI: 10.1016/J.JHAZMAT.2009.04.010 [retrieved on 2009-04-10]

## Description

### TECHNICAL FIELD

Embodiments of the invention generally relate to a base metal catalyst for the treatment of emissions from industrial and commercial processes. More particularly, the invention provides catalysts and methods for treatment of waste streams of the purified terephthalic acid (PTA) process, where the catalyst contains a first base metal catalyst supported on an oxygen donating support material, and at least one second base metal catalyst.

### BACKGROUND

Purified terephthalic acid (PTA) is a common precursor for the production of polyethylene terephthalate (PET) plastics. PET plastics are typically used for the production of plastic bottles, various fibers, and an assortment of heat-sealed films. The process of creating PTA results in a waste stream that requires cleaning prior to being vented to the atmosphere. While potential abatement technologies include scrubbing, catalytic oxidation, or thermal oxidation, the enormous volumes of PTA (>30 billion tons/year) produced limit the financially feasible technologies to catalytic oxidation. The waste stream from the PTA process on average contains 3000-7000 ppm of carbon monoxide (CO), 1-10 ppm of benzene, 5-100 ppm of methyl bromide (MeBr), and 500-1000 ppm of other VOCs (typically methane, toluene, xylene, acetic acid, methanol, etc.). While a typical oxidation catalyst would work for 90% of the waste stream, the methyl bromide provides a unique challenge. Methyl bromide enters the process from a bromine-initiated catalyst during the synthesis of the PTA monomer. This requires special handling as the halogenated hydrocarbon is known to poison many common catalysts.

Catalytic oxidation is an energy efficient and economical way of destroying gaseous organic emissions. It operates at significantly lower temperatures and shorter residence time than thermal incineration. Across the catalyst, VOC and CO emissions are oxidized to CO₂ and water, while methyl bromide is converted to CO₂, water, and HBr/Br₂. The clean gas then passes through a heat exchanger for heat recovery before being vented. Most of the catalysts or combined catalyst systems used in catalytic oxidations are based on precious metals, including Pt, Pd, and Rh. Although these noble metal catalysts are effective for waste stream emission control and have been commercialized in industry, precious metals are extremely expensive, especially in a PTA process where a large volume of catalyst is required. This high cost remains a critical factor for wide spread application of these catalysts. Therefore, there is a constant need for alternative, cheaper catalysts for the effective removal of CO, VOC, and methyl bromide emissions from industrial processes.

One possible alternative has been the use of base metals. Base metals are abundant and much less costly than precious metals. Several attempts have been made to develop base metal based catalysts for control of waste stream emissions. However, each of these attempts has been fraught with problems.

US 2010/266473 relates to a method for oxidizing carbon monoxide (CO) and volatile organic compounds (VOCs), the method comprising contacting a gas containing water vapor and said CO and VOCs with a catalyst composition comprising at least one base metal promoter and at least one base metal catalyst supported on an oxide support material comprising one or more of alumina, silica, zirconia, ceria, and titania, wherein the VOCs comprise one or more of methyl acetate, methane, methyl bromide, benzene, methanol, methyl ethyl ketone, butane, and butene.

D. Pradeep, et al. disclose in Journal of Molecular Catalysis A: Chemical 2012, Vol. 358, pages 23-30, the combustion of volatile organic compounds over CuMn based mixed oxide type catalysts supported on mesoporous AIO, TiO and ZrO.

V. H. Vu, et al. disclose in Journal ofHazardous Materials 2009, Vol 169 (1-3), pages 758-765, the removal of hazardous chlorinated VOCs over Mn-Cu mixed oxide based catalyst.

EP 1 504 805 concerns metal oxide catalysts for the conversion of nitrous oxide into gaseous nitrogen and oxygen. The catalysts contain oxides or mixed oxides of transition metals selected from Cu, Mn, Fe, La and Y, or mixtures thereof, on a support of ceria and zirconia where the metals can assume multiple valency states.

Thus, there is a need for a catalyst with improved CO, VOC, and methyl bromide emission control. There is also a need for an affordable, yet effective, catalyst. In particular, there is a need for such a catalyst for PTA process applications.

### SUMMARY

In a first aspect of the invention, embodiments are directed to a catalyst for the oxidation of a waste stream comprising carbon monoxide (CO), volatile organic compounds (VOCs), and methyl bromide. The catalyst comprises a first base metal catalyst comprising Cu in contact with an oxygen donating support that is substantially free of alumina, whereby substantially free of alumina denotes that there is no alumina intentionally added to the support and there is less than 1% alumina by weight in the oxygen donating support, and at least one second base metal catalyst comprising Mn, wherein the oxygen donating support is selected from ceria, praseodymia, neodymia, lanthana, yttria, titania, and combinations thereof, wherein the oxygen donating support includes at least 50% by weight of ceria, and wherein the catalyst comprises from 10-20 wt% CuO and 5-10 wt% MnO.

In a specific embodiment, the oxygen donating support comprises ceria or a combination of ceria and titania.

In one or more embodiments, the oxygen donating support further comprises zirconia. In an embodiment, the weight ratio of ceria to zirconia is no less than 4:1.

A second aspect of the invention is directed to a method of treating a waste stream from a purified terephthalic acid (PTA) process. The method comprises contacting a waste stream containing carbon monoxide (CO), volatile organic compounds (VOCs), and methyl bromide with a catalyst comprising a first base metal catalyst comprising Cu in contact with an oxygen donating support that is substantially free of alumina, whereby substantially free of alumina denotes that there is no alumina intentionally added to the support and there is less than 1% alumina by weight in the oxygen donating support, and at least one second base metal catalyst comprising Mn, wherein the oxygen donating support is selected from ceria, praseodymia, neodymia, lanthana, yttria, titania, and combinations thereof, wherein the oxygen donating support includes at least 50% by weight of ceria, and wherein the catalyst comprises from 10-20 wt% CuO and 5-10 wt% MnO.

A further aspect of the invention is directed to a catalytic article for the oxidation of a waste stream comprising carbon monoxide (CO), volatile organic compounds (VOCs), and methyl bromide. The catalytic article comprises a substrate washcoated with a catalyst comprising a first base metal catalyst comprising Cu in contact with an oxygen donating support that is substantially free of alumina, whereby substantially free of alumina denotes that there is no alumina intentionally added to the support and there is less than 1% alumina by weight in the oxygen donating support, and a second base metal catalyst comprising Mn, wherein the oxygen donating support is selected from ceria, praseodymia, neodymia, lanthana, yttria, titania, and combinations thereof, wherein the oxygen donating support includes at least 50% by weight of ceria, and wherein the catalyst comprises from 10-20 wt% CuO and 5-10 wt% MnO.

In one or more embodiments, the washcoat comprises up to 15% by weight alumina.

According to a further aspect, the present invention relates to the use of a catalyst comprising a first base metal catalyst comprising Cu in contact with an oxygen donating support that is substantially free of alumina, and at least one second base metal catalyst comprising Mn, wherein the oxygen donating support is selected from ceria, praseodymia, neodymia, lanthana, yttria, titania, and combinations thereof, and the oxygen donating support includes at least 50% by weight of ceria, wherein substantially free of alumina denotes that there is no alumina intentionally added to the support and there is less than 1% alumina by weight in the oxygen donating support, and wherein the catalyst comprises from 10-20 wt% CuO and 5-10 wt% MnO, for the oxidation of a waste stream comprising carbon monoxide (CO), volatile organic compounds (VOCs), and methyl bromide.

### BRIEF DESCRIPTION OF THE DRAWINGS

So that the manner in which the above recited features of the invention are attained and can be understood in detail, a more particular description of the invention, briefly summarized above, may be had by reference to the embodiments thereof which are illustrated in the appended drawings. It is to be noted, however, that the appended drawings illustrate only typical embodiments of this invention and are therefore not to be considered limiting of its scope, for the invention may admit to other equally effective embodiments.
FIG. 1 shows the carbon monoxide conversion for exemplary catalysts according to the Examples;
FIG. 2 shows the methyl bromide conversion for exemplary catalysts according to the Examples;
FIG. 3 shows the benzene conversion for exemplary catalysts according to the Examples;
FIG. 4 shows the toluene conversion for exemplary catalysts according to the Examples;
FIG. 5 shows the benzene conversion for fresh versus aged catalyst according to the Examples;
FIG. 6 shows the methyl bromide conversion for fresh versus aged catalyst according to the Examples;
FIG. 7 shows the benzene conversion by ceria content;
FIG. 8 shows the methyl bromide conversion by ceria content;
FIG. 9 shows the CO, methyl bromide, benzene, and toluene conversion for exemplary catalysts according to the Examples;
FIG. 10 shows the methyl bromide and benzene conversion for exemplary catalysts according to the Examples;
FIG. 11 shows the methyl bromide and benzene conversion for exemplary catalysts according to the Examples;
FIG. 12 shows the benzene conversion for exemplary catalysts according to the Examples;
FIG. 13 shows the methyl bromide conversion for exemplary catalysts according to the Examples;
FIG. 14 shows the CO, benzene, and methyl bromide conversion for exemplary catalysts according to the Examples
FIG. 15 shows the CO, benzene, and methyl bromide conversion for exemplary catalysts according to the Examples;
FIG. 16 shows the CO, benzene, and methyl bromide conversion for exemplary catalysts according to the Examples;
FIG. 17 shows the CO, benzene, methyl bromide, and toluene conversions for catalysts according to the Examples.

### DETAILED DESCRIPTION

Before describing several exemplary embodiments of the invention, it is to be understood that the invention is not limited to the details of construction or process steps set forth in the following description. The invention is capable of other embodiments and of being practiced or being carried out in various ways.

Provided herein are base metal catalyst formulations and processes for making and using the same. According to various embodiments of the invention, the base metal catalysts are suitable for use as catalysts for treating waste stream emissions from industrial processes, particularly PTA processes.

Thus, one aspect of the invention relates to a catalyst composition effective to catalyze the oxidation of carbon monoxide (CO), aliphatic, aromatic, oxygenated, and halogenated volatile organic compounds, including methyl bromide from the waste stream of the PTA process. The catalyst as defined above comprises a first base metal (BM) catalyst supported on and in contact with an oxygen donating support material that is substantially free of alumina, and a second base metal catalyst.

With respect to the terms used in this disclosure, the following definitions are provided.

As used herein, the term "stream" or "waste stream" broadly refers to any combination of flowing gas that may contain solid, liquid, or gaseous matter. The "waste stream" may contain gaseous constituents including, but not limited to, carbon monoxide (CO), volatile organic compounds (VOCs), methyl bromide, water, and nitrogen.

The term "support" refers to the underlying high surface area material (e.g., ceria, ceria/zirconia, titania, etc.) upon which additional chemical compounds or elements are carried. The term "substrate" refers to the monolithic material onto which the support is placed, typically in the form of a washcoat containing a plurality of supports having catalytic species thereon. A washcoat is formed by preparing a slurry containing a specified solids content (e.g., 30-50% by weight) of supports in a liquid vehicle, which is then coated onto a substrate and dried to provide a washcoat layer. As used herein, a "catalytic article" refers to a substrate having thereon a support having catalytic species thereon. A catalytic article can include one or more washcoats on a substrate.

As used herein, the term "supported on" and "in contact with" refers to the location of the first base metal catalyst in relation to the oxygen donating support. The first base metal catalyst directly contacts the oxygen donating support. In other words, the first base metal catalyst is in intimate contact with the oxygen donating support. The at least one second base metal catalyst may be supported on or be in contact with the oxygen donating support, but this may not be required.

Catalytic oxidation is used to control CO, VOC, and methyl bromide waste stream emissions from industrial and commercial processes. A method for oxidizing carbon monoxide (CO), volatile organic compounds (VOCs), and methyl bromide utilizes a catalyst in contact with a gas containing at least water vapor, CO, VOCs, and methyl bromide. The gas can include VOCs such as saturated and unsaturated hydrocarbons, aromatic hydrocarbons, and mono- and polyhalogenated derivatives thereof, such as halocarbons, dioxins, and hydrocarbons containing one or more sulfur, oxygen, nitrogen, phosphorous, chlorine or bromine atoms. The gas may be emitted from an industrial or commercial process, e.g. a process of producing purified terephthalic acid (PTA).

In a commercial process for producing PTA, terephthalic acid can be produced by oxidation of *p*-xylene by oxygen using acetic acid as a solvent. This can occur in the presence of a catalyst such as cobalt or manganese containing catalyst using a bromine containing promoter. The product can be purified by hydrogenation while in a water solution and then cooled. The waste gas stream in a PTA process can comprise, but is not limited to, oxygen, nitrogen, nitrogen oxides, methyl bromide, benzene, toluene, methane, carbon monoxide, methyl acetate, and water. This stream typically contains 3000-7000 ppm of carbon monoxide (CO), 1-10 ppm of benzene, 5-100 ppm of methyl bromide (MeBr), and 500-1000 ppm of other VOCs (typically methane, toluene, benzene, xylene, acetic acid, methanol, etc.).

PTA processes may have significant amounts (about 1-10%) of steam/water. Accordingly, the base metal catalysts and support must be stable and able to effectively function in an environment with moisture. Certain catalysts and supports, such as zeolites, are known to degrade under hydrothermal conditions, especially over a period of time. The base metal catalyst composition, therefore, is able to maintain stability and work effectively in a gas containing water vapor.

When the gas, such as a waste gas stream from PTA, containing water vapor, CO, methyl bromide, and VOCs, is in contact with a catalyst composition according to one or more embodiments, the CO, VOCs, and methyl bromide are oxidized. The process effluent can be preheated and passed through a catalyst bed in the presence of surplus oxygen, and the polluting components in the waste stream are oxidized to carbon dioxide (CO₂), water (H₂O), hydrogen bromide (HBr), and bromine gas (Br₂). Hydrogen bromide from downstream of the catalyst can be removed from the effluent by passing the gas through a caustic scrubber, removing the pollutants from effluent before emitting the exhaust to the atmosphere.

The catalyst composition comprises a first base metal catalyst comprising Cu and at least one second base metal catalyst comprising Mn. The base metal catalysts can further comprise one or more base metal oxides selected from the group comprising iron (Fe), cobalt (Co), nickel (Ni), chromium (Cr), neodymium (Nd), barium (Ba), cerium (Ce), lanthanum (La), praseodymium (Pr), magnesium (Mg), calcium (Ca), zinc (Zn), niobium (Nb), zirconium (Zr), molybdenum (Mo), tin (Sn), tantalum (Ta), and strontium (Sr), or combinations thereof.

In one or more embodiments, without intending to be bound by theory, when more than one base metal catalyst is present, one of the base metal catalysts may act as a base metal promoter. As used herein, the term "promoter" refers to a substance that when added into a catalyst, increases the activity of the catalyst.

Without intending to be bound by theory, it is thought that a certain mechanism can elucidate some of the mechanistic understanding of the catalytic oxidation. The characteristic feature of this mechanism is that the oxygen in the reaction comes from the support. In other words, the support participates more actively in the reaction, playing a role in the reaction rather than merely acting as a suitable substrate. The mechanism explicitly requires a redox process in which oxygen from the support adjacent to the catalyst reacts with the VOC. The oxygen is then replenished by oxygen from the vapor phase. Oxygen is not simply added to the reductant from the gas phase or on the surface of the catalyst directly, but is first bonded to the support adjacent to the catalyst surface. The organic reactant is oxidized then by the catalyst surface. The function of gas-phase oxygen is to replenish the oxygen on the support by adsorption and/or solid-state diffusion. Accordingly, the interaction between the first base metal catalyst comprising Cu and the oxygen donating support (e.g. ceria, ceria/zirconia) provides the oxygen necessary for the oxidation reaction. When the base metal catalyst is on a support such as alumina, the reaction cannot proceed by this mechanism because alumina cannot donate oxygen to the catalyst surface.

The first base metal catalyst is supported on an oxygen donating support material. The support material for the first base metal catalyst is comprised of one or more materials that is selected from ceria, praseodymia, neodymia, lanthana, yttria, titania, zirconia, and combinations thereof. As used herein, the term "oxygen donating" refers to a material that can donate oxygen to the adjacent surface of a catalyst material. Examples of suitable oxygen donating supports comprise the rare earth oxides, particularly ceria. The oxygen donating support comprises at least 50% by weight ceria.

The catalyst support comprises an oxygen donating support material, whose valence state can be switched under emission conditions. The rare earth oxides cerium and praseodymium exhibit multiple oxidations states. It is the ability of each of cerium and praseodymium to vary their oxidation states that readily permits the mobility of oxygen through the lattice. Due to this oxygen mobility, the oxygen depleted by the reaction can be replenished by oxygen transported through the lattice. Oxygen depleted by the reaction can also be replenished by oxygen from the gas phase. This can be true whether or not oxygen is mobile through the lattice of the material. In one or more embodiments, the oxygen donating support is ceria. In particular, the support includes at least 50% by weight of ceria. In yet other embodiments, the support includes at least about 99% by weight of ceria.

In other embodiments, the oxygen donating support further contains other elements/components to improve the reducibility of the support and/or to stabilize the support against loss of surface area and structure integrity under high temperature hydrothermal aging condition. Such components can include Pr, Nd, Sm, Zr, Y, Si, Ti and La, which may be present in an amount of about 1 to about 50 wt%. In one or more embodiments, the support comprises a mixture of ceria and zirconia, and the weight ratio of Ce/Zr is no less than 4:1.

The support is substantially free of alumina. As used herein, the phrase "substantially free of alumina" means that there is no alumina intentionally added to the support, and that there is less than about 1% of alumina by weight in the oxygen donating support. In one or more embodiments, there is no alumina present at all in the oxygen donating support. Without intending to be bound by theory, it is thought that because alumina is inert and less active, if the support contains alumina, there is less room for the support to contain the more active component. Thus, a support that is substantially free of alumina provides more opportunity for the active oxygen storage component to produce activity.

The first base metal catalyst comprising Cu is supported on an oxygen donating support material that is substantially free of alumina. The oxygen donating support material may comprise one or more of praseodymia (Pr₂O₃), neodymia (Nd₂O₃), lanthana (LaO₂), yttria (YO₂), titania (TiO₂), and combinations thereof. The oxygen donating support material can also comprise mixtures of these with other oxide materials such as with zirconia (ZrO₂). Thus, the oxygen donating support may include composite oxides or mixed oxides of two or more thereof (such as CeZrO₂ mixed oxides and TiZrO₂ mixed oxides).

The oxygen donating support material may also be stabilized. Stabilizers may be selected from zirconium (Zr), lanthanum (La), yttrium (Yt), praseodymium (Pr), neodymium (Nd), and oxide thereof, a composite oxide or mixed oxide of any two or more thereof or at least one alkaline earth metal, e.g. barium (Ba).

In one or more embodiments, the oxygen donating support comprises a mixture of ceria and zirconia. Without intending to be bound by theory, it is thought that the zirconia aids in long term aging by preserving stability of the catalyst. Additionally, zirconia offers a less expensive alternative to ceria.

It has been observed that the activity of the catalyst is proportional to the Ce/Zr ratio. Any ratio of Ce/Zr is possible, however, as the amount of ceria decreases (i.e., the higher the content of zirconia), the lower the activity of the catalyst. In one or more embodiments, the ratio of Ce/Zr is no less than 4:1. In other words, the oxygen donating support can comprise 80% ceria and 20% zirconia, 75% ceria and 25% zirconia, 70% ceria and 30% zirconia, 65% ceria and 35% zirconia, 60% ceria and 40% zirconia, 65% ceria and 45% zirconia, 50% ceria and 50% zirconia. In a specific embodiment, the oxygen donating support comprises an equivalent amount of ceria and zirconia.

The oxygen donating support includes at least 50% by weight of ceria. In a specific embodiment, the oxygen donating support includes at least 99% by weight of ceria.

During catalytic oxidation, an input stream typically at 275°C is entered into a catalyst bed containing the aforementioned base-metal catalyst blocks. The copper-ceria portion of the catalyst is essential for the oxidation of VOCs, benzene, and carbon monoxide, while the manganese base metal catalyst present aids in the oxidation of methyl bromide to hydrogen bromide and diatomic bromine; each of which is subsequently removed using a scrubber post-catalyst bed. During this oxidation, the exotherm caused by the oxidation reaction further heats the waste stream and results in higher conversions of >95% for each individual species. It is important to note that care must be taken to keep the process temperature below 500°C for two reasons. First, prolonged times of temperature greater than 500°C would result in significant catalyst deactivation, and, second, oxidation of any present methane. The methane present in the waste stream is typically not required to be oxidized, and in this particular process, the oxidation of methane would result in the unfortunate recombination to methyl bromine at temperatures greater than 500°C. As a result, the process is typically operated at lower temperatures and at a space velocity of approximately 20,000 hr⁻¹.

The base metals may be added in the form of a nitrate or acetate or other base metal salt. In particular, the first base metal catalyst may be impregnated on a support or coated on a pellet or monolith. In one or more embodiments, copper is impregnated on a ceria support, and then is impregnated with at least one second base metal catalyst. Catalysts according to one or more embodiments demonstrate superior activity and durability compared to commercial catalyst. For PTA waste stream emission control, the catalysts according to one or more embodiments are able to convert CO, VOCs, and methyl bromide at lower temperatures than current commercial catalysts at comparable temperatures. The catalysts according to one or more embodiments also demonstrate superior durability and longevity.

The base metal catalysts may be added, for example, in the form of a nitrate or an acetate or other base metal salt solution. For example, the Mn in the at least one second base metal catalyst comprising manganese may be added in the form of Mn nitrate. The first base metal catalyst may be impregnated from an aqueous solution onto the oxygen donating support material(s), or may be added into a washcoat comprising the oxygen donating support material(s).

In one or more embodiments, the catalyst is washcoated onto a substrate to create a catalytic article. The washcoat can contain an inert material, such as alumina or silica, in an amount of up to 15% by weight to improve the porosity and diffusion of the waste stream's components through the washcoat. It is noted that this material is not part of the catalyst or support material, but is added to the washcoat. Thus, in one or more embodiments, a catalytic article comprises a substrate washcoated with a catalyst comprising a first base metal catalyst supported on an oxygen donating support that is substantially free of alumina, and at least one second base metal catalyst. The catalytic article can comprise alumina in an amount of up to 15% by weight.

The first base metal catalyst comprises copper, and the at least one second base metal catalyst comprises manganese. Without intending to be bound by theory, it is thought that the Cu provides for increased oxidation of CO and VOCs, while the Mn provides for increased oxidation of methyl bromide.

In one or more embodiments, more than one at least one second base metal can be used. Thus, in certain embodiments, the catalyst comprises two, three, or even more base metals. Non-limiting examples of base metal combinations include, but are not limited to: copper and manganese; and copper, iron, and manganese. The first base metal catalyst and the at least one second base metal catalyst comprise a combination of copper and manganese. Note that the weight percentages of base metal oxide are for the total base metal amount. Thus, for a catalyst comprising 15 wt% base metal oxide and two base metals, for example, then the two base metal oxides combined would total 15 wt%.

In one or more embodiments, the catalyst does not include a precious metal. In other words, a precious metal selected from ruthenium, rhodium, palladium, osmium, iridium, and platinum is not included in the catalyst.

In one or more embodiments, the amount of the first base metal catalyst will be equivalent to or greater than the at least one second base metal catalyst. The amount of CuO of the first base metal catalyst is from 10 wt% to 20 wt%. The amount of MnO of the at least one second base metal catalyst is from 5 wt% to 10 wt%. In a specific embodiment, the first base metal catalyst and the at least one second base metal catalyst are present in an equivalent amount. In a very specific embodiment, the first base metal catalyst and the at least one second base metal catalyst are present in equivalent amounts of 10 wt%, so the total base metal present in the catalyst is 20 wt%.

The amount of copper present is equivalent to or greater than the amount of manganese present. In particular, the amount of copper is from 10 wt% to 20 wt%, and the amount of manganese present is from 5 wt% to 10 wt%. In a specific embodiment, the copper and manganese are present in an equivalent amount of 10 wt%, so the total base metal present in the catalyst is 20 wt%.

The oxygen donating support carrying the first base metal catalyst can be deposited on a substrate to provide a desired amount of catalytic species on the substrate. For example, the support may comprise about 70% or 75% or 80% or 85% of the catalyst. The catalyst deposited on the substrate is generally formed as a coated layer over most, if not all, of the surfaces of the substrate contacted. The substrate may comprise a loading of from about 0.104 to about 0.168 g/cm³ (about 1.7 to about 2.75 g/in³) on a monolith of 400 cpsi (62 cells/cm²). The catalyst can be deposited on the substrate as a washcoat. The washcoat can contain alumina in an amount of up to 15% by weight in order to improve the porosity and diffusion of the catalyst.

In one or more embodiments, the substrate is a ceramic or metal having a honeycomb structure. Any suitable substrate may be employed, such as a monolithic substrate of the type having fine, parallel gas flow passages extending therethrough from an inlet or an outlet face of the substrate such that passages are open to fluid flow therethrough. The passages, which are essentially straight paths from their fluid inlet to their fluid outlet, are defined by walls on which the catalytic material is coated as a washcoat so that the gases flowing through the passages contact the catalytic material. The flow passages of the monolithic substrate are thin-walled channels, which can be of any suitable cross-sectional shape and size such as trapezoidal, rectangular, square, sinusoidal, hexagonal, oval, circular, etc. Such structures may contain from about 9 to 140 or more gas inlet openings (i.e. cells) per square centimetre of cross-section (about 60 to about 900 cpsi).

The ceramic substrate may be made of any suitable refractory material, e.g. cordierite, cordierite-alumina, silicon nitride, zircon mullite, spodumene, alumina-silica-magnesia, zircon silicate, sillimanite, a magnesium silicate, zircon, petalite, alumina, an aluminosilicate and the like.

The substrates useful for embodiments of the present invention may also be metallic in nature and be composed of one or more metals or metal alloys. The metallic substrates may be employed in various shapes such as pellets, corrugated sheet or monolithic form. Specific examples of metallic substrates include the heat-resistant, base-metal alloys, especially those in which iron is a substantial or major component. Such alloys may contain one or more of nickel, chromium, and aluminum, and the total of these metals may advantageously comprise at least about 15 wt. % of the alloy, for instance, about 10 to 25 wt. % chromium, about 1 to 8 wt. % of aluminum, and about 0 to 20 wt. % of nickel.

### Preparation

Another aspect of the invention relates to methods of preparing the catalysts described herein. In one or more embodiments, the oxygen donating support and base metal catalysts can be prepared into solid phase mixtures through wet chemistry processes such as incipient wetness impregnation, co-precipitation, post-dip impregnation, deposition precipitation, single-pot, or other processes. These elements can also be added together with active base metal components during catalyst preparation without use of the pre-formed oxides as supports. In one or more embodiments, the catalyst is prepared by incipient wetness impregnation.

With incipient wetness impregnation, a solution of base metal catalyst precursors are dispensed into a well-mixed powder bed containing the oxygen donating support (e.g. ceria, ceria/zirconia, titania). The powder is then calcined at about 500°C after the first base metal catalyst is added, followed sequentially by the dispensing and calcining of the at least one second base metal catalyst. Alternatively, a solution containing both base metal catalyst precursors together can be dispensed into the well-mixed powder bed containing the support. The completed calcined catalyst powder is then washcoated onto a substrate (e.g. 400 cpsi (62 cells/cm²) cordierite) with a binder to a loading of about 0.104 to about 0.168 g/cm³ (about 1.70 to about 2.75 g/in³). Inert materials (e.g., alumina) can be added in an amount of up to 15% by weight to improve porosity and diffusion through the washcoat.

With post-dip impregnation, a substrate is pre-coated with the slurry containing that catalyst, support, binder and other inert materials (e.g., alumina added for porosity). After drying and calcination, the coated substrate cores are dipped in a solution containing the base metal catalyst(s) precursors. The completed cores are then dried and calcined at 500°C to provide the final catalytic article.

If a pre-made support is not used in catalyst preparation, precursors of the desired base metals may be mixed with precursors of the support to form a homogeneous solution. Then, the solution pH can be adjusted through addition of, for example, NH₄OH, to form a precipitate of the catalyst and support. Other structure directing agents (such as polymer or surfactants) can also be added. The mother solution can then be aged to obtain the suitable particle size for monolith coating. The precipitates may also be separated by using filtering for drying and calcination. The resulting material is then used for making a slurry and monolith coating.

Deposition impregnation involves forming a suspension of the support material and mixing well. A base metal precursor solution (e.g. Cu and Mn nitrate) is then slowly added to the suspension, while the pH is regulated (controlled and adjusted) to keep the pH at a constant of 8 to 10 through the addition of a base. The pH is adjusted so that deposition of the base metal on and over the surface of the support material occurs. The resulting material is then used for making a slurry and monolith coating.

For a single-pot synthesis, the support, base metal catalyst precursors, binder, and any inert materials (e.g., added to increase washcoat porosity) are mixed together to form a slurry. The resulting slurry is then used for monolith coating.

In one or more embodiments, the mode of use of the base metal catalysts are as monolith carrier supported catalysts. There are many suitable variants for the manufacture of the catalysts described herein. The active base metal catalyst formulations can be coated on the surface of a monolith structure. Monolith structures offer high geometric surface area, excellent thermal and mechanical strength, and are thus particularly suitable for emission control. Any monolith structure can be used that includes ceramic, metallic such as Fecralloy^{®}, stainless steel and other metals or alloys. The monolith can be of straight channel or pattern channels, or in foam or other structures.

The catalyst can be applied to the monolith surface using any suitable process, including slurry coating, spray coating, etc. The first base metal catalyst and the at least one second base metal catalyst comprise Cu and Mn, respectively. The suitable precursors of these base metals may be of pure or mixed salts, oxides, or mixed oxides. These base metals can be applied using those chemical precursors and coating technologies well-known to a person having ordinary skill in the art. For example, cobalt can be applied using cobalt nitrate, iron can be applied using iron nitrate, and manganese can be applied using manganese nitrate through an incipient wetness impregnation and slurry coating process.

In embodiments relating to supported base metal formulations, pre-made supports may be used for impregnation of the solution of active base metal or combination of base metals. The resulting catalyst can then be mixed with a suitable binder. Examples of a suitable binder include alumina sol, Boehmite, silica sol, titania sol, zirconium acetate, and colloidal ceria sol. Alternatively, the resulting catalyst can be calcined first, and then mixed with binder to make a suitable slurry for monolith coating. In yet other embodiments, the first base metal catalyst deposited on the oxygen donating support may be mixed with other based metal catalysts deposited on another support to make a slurry for monolith washcoating.

The final coated monolith catalysts can then be dried at 120 °C for 2 hours and calcined at a temperature ranging from about 300 to about 1000 °C. In other embodiments, the catalyst is calcined at a temperature ranging from about 400 to about 950 °C. In a further embodiment, the catalyst is calcined at a temperature ranging from about 450 to about 500 °C.

In embodiments relating to catalysts supported on a substrate, the catalyst can be loaded in an amount of greater than 0.104 g/cm³ (greater than 1.7 g/in³). In specific embodiments, the catalyst can be loaded in an amount in the range of 0.104 to 0.244 g/cm³ (1.7 g/in³ to 4.0 g/in³). In a more specific embodiment, the catalyst can be loaded in an amount of about 0.165 g/cm³ (about 2.7 g/in³), or in an amount of about 0.168 g/cm³ (about 2.75 g/in³).

### Method of Use

One or more embodiments of the catalysts described herein are suitable for treating the waste stream generated in the purified terephthalic acid process (PTA). Accordingly, another aspect of the invention relates to a method of treating a waste stream generated by the purified terephthalic acid process (PTA). The method comprises contacting the waste stream containing carbon monoxide (CO), volatile organic compounds (VOCs), and methyl bromide with a catalyst as defined above comprising a first base metal catalyst supported on and in contact with an oxygen donating support that is substantially free of alumina, and at least one second base metal catalyst. Generally, variants of the catalyst used in this aspect may be chosen from the catalyst embodiments described herein.

The catalyst comprises a first base metal catalyst comprising copper and at least one second base metal catalyst comprising manganese. The copper is supported on and in contact with the oxygen donating support. The catalyst comprises from 10-20 wt% copper and from 5-10 wt% manganese. In a more specific embodiment, the first base metal catalyst comprises 10 wt% copper and the at least one second base metal catalyst comprises 10 wt% manganese.

The oxygen donating support comprises at least 50% by weight of ceria. In a further embodiment, the oxygen donating support comprises at least 99% by weight of ceria. The oxygen donating support can comprise a mixture of ceria and zirconia, and the weight ratio of Ce/Zr is no more than 4:1.

One or more embodiments of the catalysts described herein are suitable for use as a catalytic article. In embodiments, the catalyst is washcoated onto a substrate to create a catalytic article. Generally, variants of the catalyst used in this aspect may be chosen from the catalyst embodiments described herein.

The catalytic article comprises a catalyst comprising a first base metal catalyst supported on an oxygen donating support that is substantially free of alumina, and at least one second base metal catalyst. The catalyst comprises copper and manganese, in amounts of from 10-20 wt% copper and from 5-10 wt% manganese. In very specific embodiments, the catalytic article includes a substrate and a catalyst comprising 10 wt% CuO supported on an oxygen donating support comprising at least 50% by weight ceria that is substantially free of alumina, and 10 wt% MnO. In a further embodiment, the catalytic article includes a substrate and a catalyst comprising 10 wt% CuO supported on an oxygen donating support comprising at least 99% by weight ceria that is substantially free of alumina, and 10 wt% MnO

The use of the terms "a" and "an" and "the" and similar referents in the context of describing the materials and methods discussed herein (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the materials and methods and does not pose a limitation on the scope unless otherwise claimed. No language in the specification should be construed as indicating any non-claimed element as essential to the practice of the disclosed materials and methods.

The invention is now described with reference to the following examples. Before describing several exemplary embodiments of the invention, it is to be understood that the invention is not limited to the details of construction or process steps set forth in the following description. The invention is capable of other embodiments and of being practiced or being carried out in various ways.

### EXAMPLES

There are many variations and combinations that can be made based on this disclosure to prepare base metal catalysts for emission control without departure from the spirit of this disclosure. The following examples and embodiments are given for illustration purposes only and should not be used to limit the invention.

### Example 1

Mn and Cu nitrate salts were mixed with water to make a solution for the incipient wetness impregnation of cerium oxide. The cerium oxide was then impregnated with the solution and then dried for two hours at 110°C and calcined at 500°C for three hours. The Mn and Cu loadings in the impregnated catalyst are equivalent to 10 wt% MnO₂ and 10 wt% CuO on ceria. The impregnated sample was then mixed with water and an alumina sol binder (5 wt%) and alumina (15%) to form a slurry that contains about 42 wt% solid. The pH of the slurry was adjusted to 4.0 with nitric acid. The slurry was then milled to a particles size suitable for washcoating. A monolith catalyst was then prepared by washcoating the slurry onto a cordierite substrate with a cell density of 400 cpsi (62 cells/cm²).

After washcoating, the monolith was then dried at 120°C for 2 hours and calcined at 500°C for 2 hours. The catalyst washcoat loading was 0.168 g/cm³ (2.75 g/in³).

*Replacement page*

### Example 2 (not according to the invention)

Mn and Cu nitrate salts were mixed with water to make a solution for the incipient wetness impregnation of cerium oxide. The cerium oxide was then impregnated with the solution and then dried for two hours at 110 °C and calcined at 500 °C for three hours. The Mn and Cu loadings in the impregnated catalyst were equivalent to 5 wt% MnO₂ and 10 wt% CuO on ceria. The impregnated sample was then mixed with water and an alumina sol binder (5 wt%) to form a slurry that contains about 42 wt% solids. The pH of the slurry was adjusted to 4.5 with nitric acid. The slurry was then milled to a particles size suitable for washcoating. Monolith catalyst was then prepared by washcoating the slurry onto a cordierite substrate with a cell density of 400 cpsi (24.4 cells/cm³). After washcoating, the monolith was then dried at 120°C for 2 hours and calcined at 500°C for 2 hours. The catalyst washcoat loading was 0.104 g/cm³ (1.70 g/in³).

### Example 3 (not according to the invention)

The monolith catalyst in this example was prepared following the same procedure described for Example 2, except the support used was a ceria-zirconia material that contained 80 wt% ceria.

### Example 4 (reference example)

The monolith catalyst in this example was prepared following the same procedure described for Example 2, except the support used was a ceria-zirconia material that contained 45 wt% ceria.

### Example 5 (reference example)

The monolith catalyst in this example was prepared following the same procedure described for Example 2, except the support used was a ceria-zirconia material that contained 12.5 wt% ceria.

### Example 6 (reference example)

The monolith catalyst in this example was prepared following the same procedure described for Example 2, except the support used was titania.

### Example 7 (reference example)

The monolith catalyst in this example was prepared following the same procedure described for Example 2, except the catalyst washcoat loading was 0.168 g/cm³ (2.75 g/in³).

### Example 8 (not according to the invention)

Mn and Cu nitrate salts were mixed with water to make a solution. This solution was added to a suspension of cerium oxide held at 80 °C. During the addition, the pH of the suspension was held to a constant of 8 to 10 with a solution of sodium hydroxide. The resulting powder was then filtered, washed with water, and then dried for two hours at 110 °C and then calcined for three hours at 500 °C. The Mn and Cu loadings were equivalent to 5 wt% MnO₂ and 10 wt% CuO on ceria. The sample was then mixed with water and an alumina sol binder (5 wt%) to form a slurry that contained about 42 wt% solids. The pH of the slurry was adjusted to 4.5 with nitric acid. The slurry was then milled to a particles size suitable for washcoating. Monolith catalyst was then prepared by washcoating the slurry onto a cordierite substrate with a cell density of 400 cpsi (62 cells/cm²). After washcoating, the monolith was then dried at 120°C for 2 hours and calcined

### Example 9 (reference example)

The monolith catalyst in this example was prepared following the same procedure described for Example 2, except the Mn nitrate was not added

### Example 10 (reference example)

The monolith catalyst in this example was prepared following the same procedure described for Example 2, except no Cu nitrate was not added

### Example 11

(not according to the invention)

The monolith catalyst in the example was prepared following the same procedure described for Example 2, except the Cu loading in the impregnated catalyst was equivalent to 20 wt% CuO.

### Comparative Example 1

This catalyst was prepared by dip-impregnation of a coated substrate. A La-stabilized alumina and a CeZrO₂ mixed oxide were milled separately to a particle size suitable to form washcoatable slurries. These two slurries were mixed together to form a washcoat which contained 20% La-stabilized alumina and 80% CeZrO₂ mixed oxide. The washcoat was coated onto a ceramic monolith substrate with 62 cells per square centimetre (400 cpsi) J to achieve a loading of 0.168 g/cm³ (2.75 g/in³) of the substrate. After being dried at 60°C and calcined at 500°C, the substrate was then dip-impregnated with a mixture of an aqueous solution of Cu nitrate and Mn nitrate. The target loadings were 8 wt% CuO and 16 wt% MnO. Impregnation was followed by drying at 60°C and calcining at 500°C for 2 hours to provide the final catalytic article.

### Comparative Example 2- Precious Metal Catalyst

The precious metals Pd and Pt were incorporated onto a manganese-zirconia support (containing 20% Mn and 80% Zr) using a single pot synthesis. The manganese-zirconia, and the Pd and Pt precursor salts were mixed with the binder (an alumina sol) to create a slurry. The target precious metals loading was 0.85%. The precious metals Pd and Pt were incorporated in a ratio of 4/1. The slurry was then washcoated onto a honeycomb having a cell density of 200 to 400 cpsi (31 to 62 cells/cm²), which was then calcined to produce the catalytic article.

### Comparative Example 3 - Co-Precipitation Method

Nitrates of Cu, Mn, and Ce were mixed to form a homogeneous solution. The Cu, Mn, and Ce loadings were equivalent to 5% MnO₂, 10% CuO, and 85% ceria. Then, the solution pH was adjusted through the addition of sodium hydroxide to form a co-precipitate. The resulting powder was then filtered, washed with water, and then dried for two hours at 110 °C and then calcined for three hours at 500 °C. The Mn and Cu loadings were equivalent to 5 wt% MnO₂ and 10 wt% CuO on ceria. The sample was then mixed with water and an alumina sol binder (5 wt%) to form a slurry that contained about 42 wt% solids. The pH of the slurry was adjusted to 4.5 with nitric acid. The slurry was then milled to a particles size suitable for washcoating. Monolith catalyst was then prepared by washcoating the slurry onto a cordierite substrate with a cell density of 400 cpsi (62 cells/cm²). After washcoating, the monolith was then dried at 120°C for 2 hours and calcined

### Performance Tests

Performance of the catalysts described in the above examples was tested using a lab testing protocol to mimic the waste stream generated in the purified terephthalic acid (PTA) process.

Lab simulating tests were conducted in a laboratory-scale or flow-through reactor under the conditions shown in Table 1.

**Table 1: Conditions of Reactor**

| | |
|---|---|
| Temperature | 250-500°C |
| Pressure | 15-20 psig (103.4-137.9 kPa) |
| Gas Space Velocity | 20,000 hr⁻¹ |
| Gas Composition | CO: 3000 ppm |
| | O₂: 3% |
| | Benzene: 10 ppm |
| | Toluene: 10 ppm |
| | Methyl bromide (CH₃Br): 30 ppm |
| | H₂O: 1% |
| | N₂: Balance |

Simulated catalyst aging was conducted in a laboratory-scale or flow-through reactor under the conditions shown in Table 2.

**Table 2: Conditions of Reactor**

| | |
|---|---|
| Temperature | 600°C |
| Pressure | 15-20 psig (103.4-137.9 kPa) |
| Aging Time | 18 hours |
| Gas Space Velocity | 20,000 hr⁻¹ |
| Gas Composition | CO: 3000 ppm |
| | O₂: 3% |
| | Methyl bromide (CH₃Br): 30 ppm |
| | H₂O:1% |
| | N₂: Balance |
| | |

### Results:

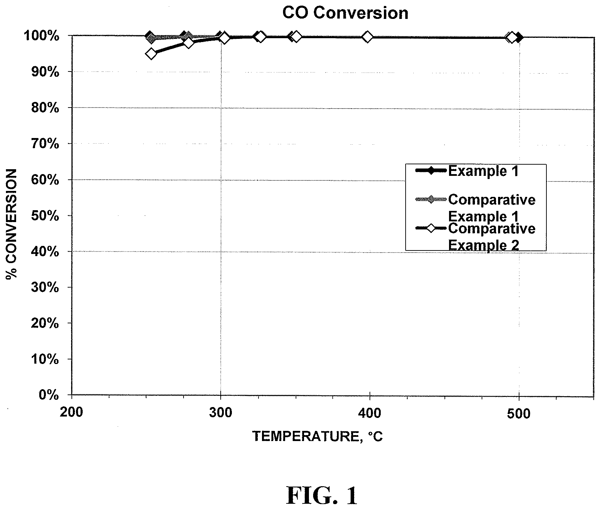

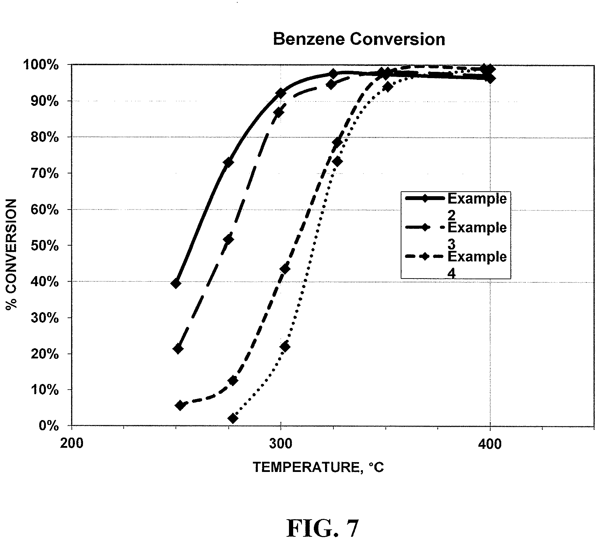

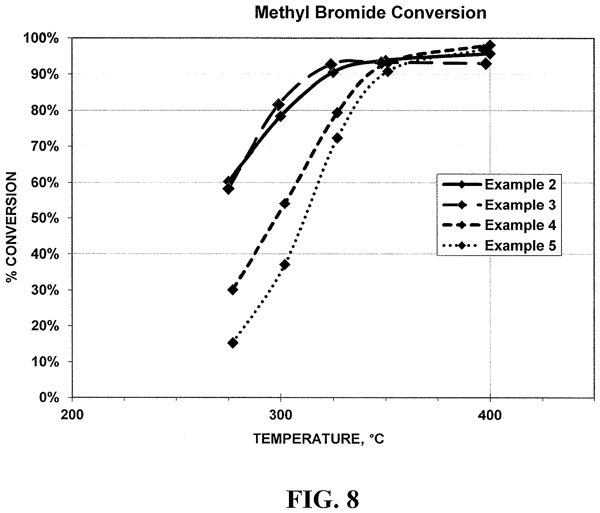

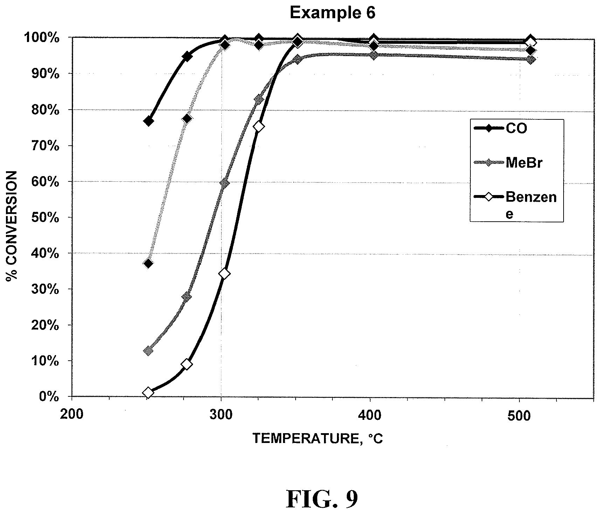

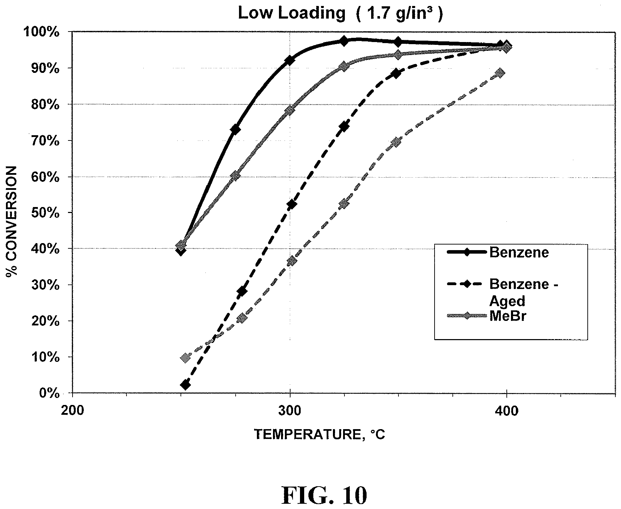

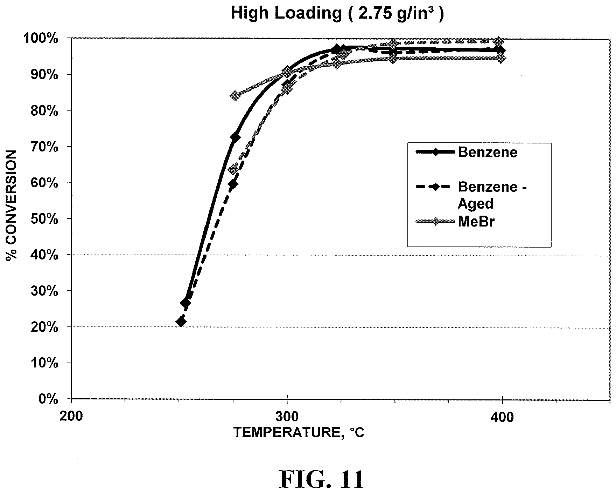

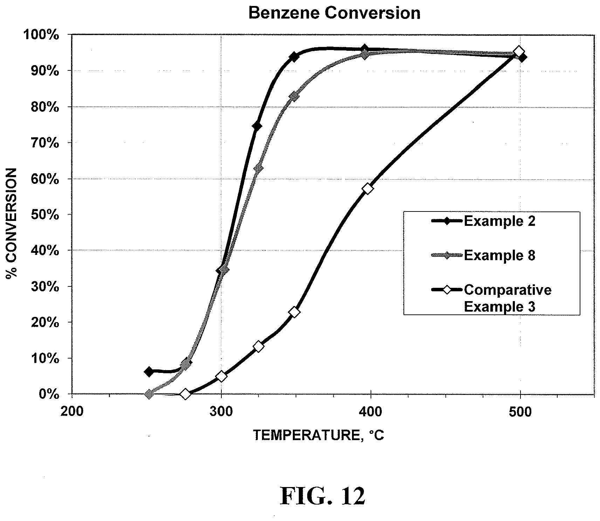

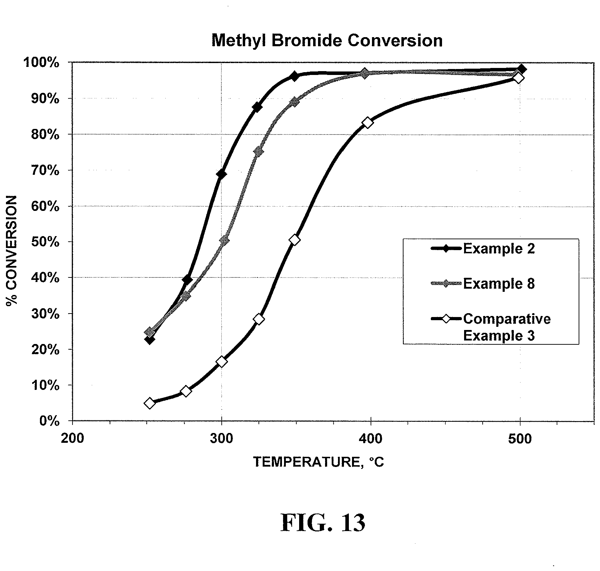

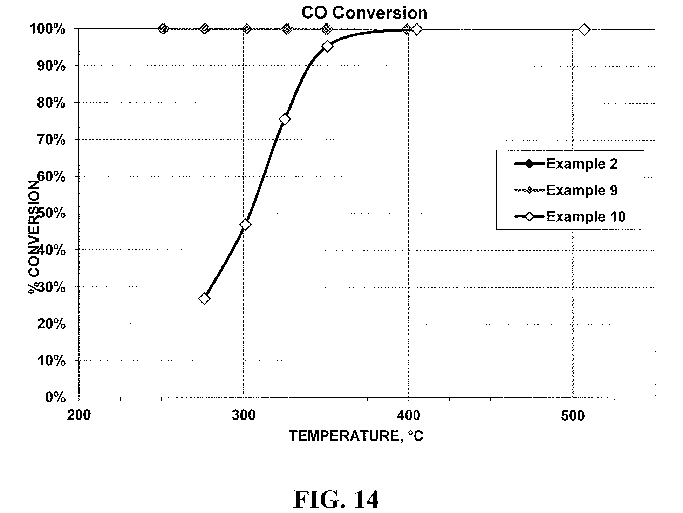

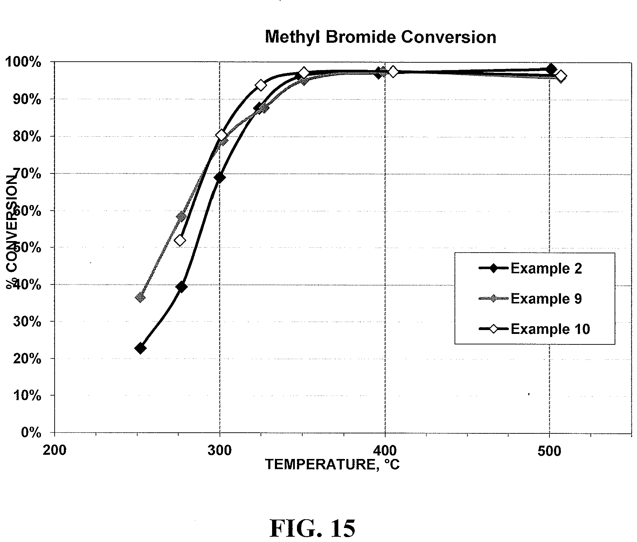

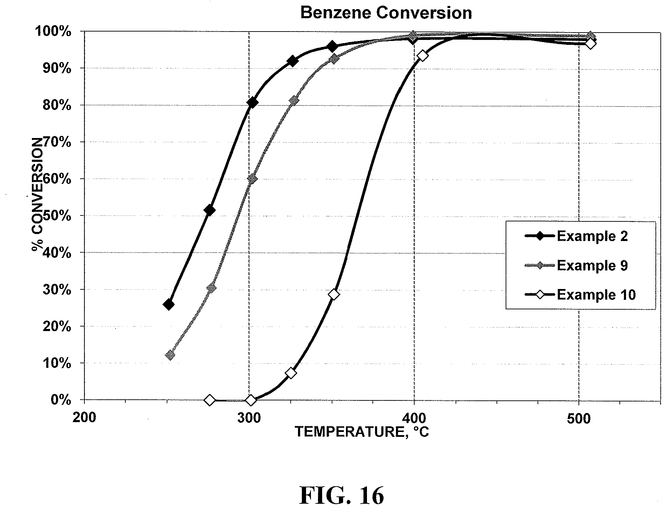

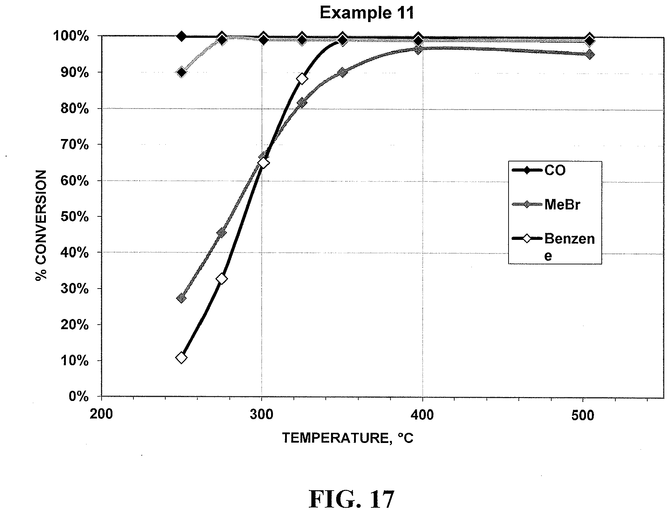

FIGS. 1-6 show the performance of the catalysts from Example 1 and Comparative Examples 1-2, respectively. The data show performance of the catalysts in the conversion of CO, methyl bromide, and the VOCs benzene and toluene. FIGS. 7 and 8 show the benzene conversion and methyl bromide conversion for the catalysts from Examples 2-5. FIG. 9 shows the CO, methyl bromide, benzene, and toluene conversions for the catalyst of Example 6. FIGS. 10 and 11 show the methyl bromide and benzene conversion for the catalysts from Examples 2 and 7, respectively. FIGS. 12 and 13 show the benzene and methyl bromide conversion, respectively, for the catalysts from Examples 2 and 8 and Comparative Example 3. FIGS. 14-16 show the CO, benzene, and methyl bromide conversions, respectively, for the catalysts in Examples 2, 9, and 10. FIG. 17 shows the CO, methyl bromide, benzene, and toluene conversions for the catalyst of Example 11.

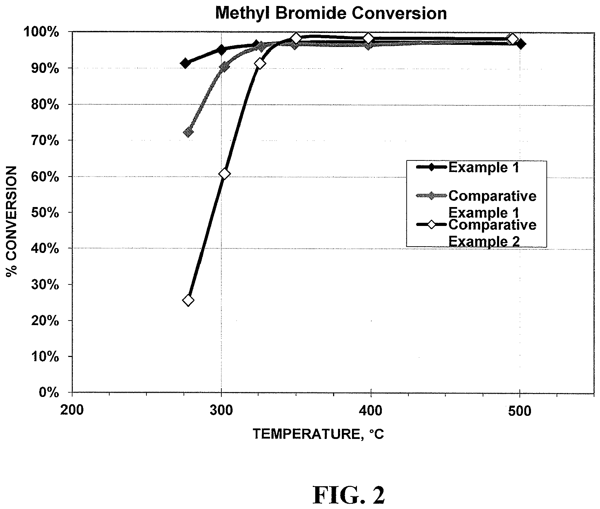

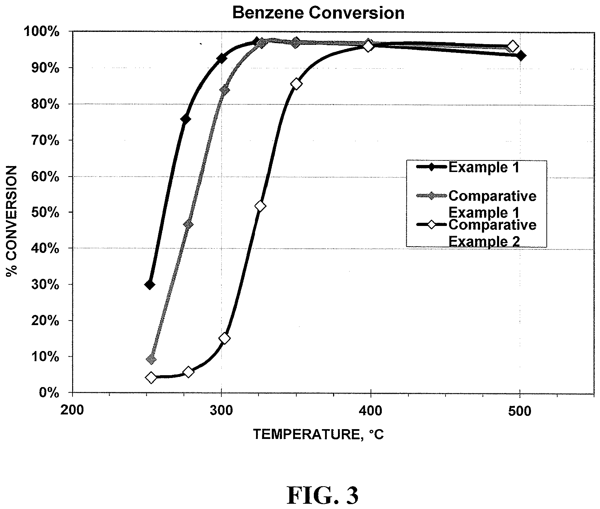

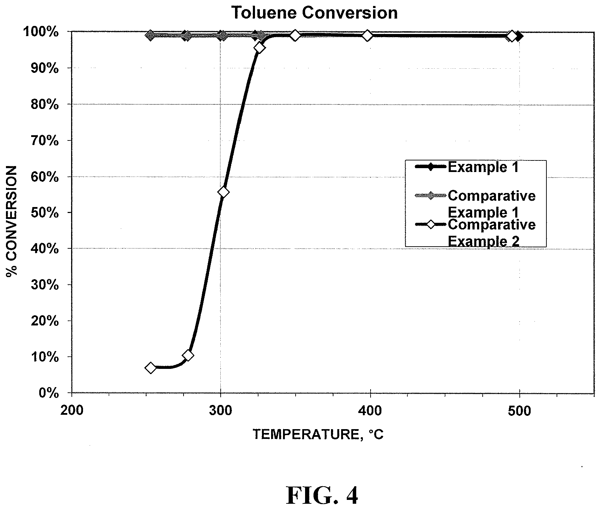

The data indicates that the catalyst prepared according to embodiments of the invention in Example 1 have improved performance when compared to a catalyst not prepared in accordance with embodiments of the invention (Comparative Examples 1 and 2). Specifically, FIG. 1 shows that carbon monoxide is fully oxidized by all the catalyst formulations at all temperatures. FIG. 2 shows that the catalysts prepared according to the invention show improved performace at lower temperature for methyl bromide conversion. For benzene conversion, FIG. 3 shows that the catalysts prepared according the invention show marked increase in performance. FIG. 4 illustrates that the base metal catalysts fully oxidize toluene at all temperatures.

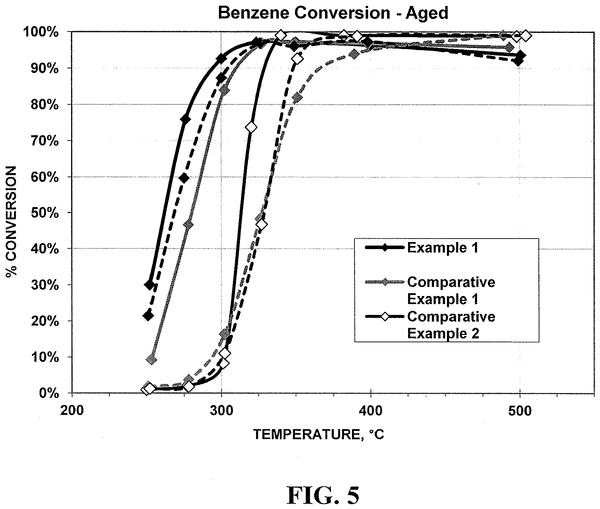

FIG. 5 shows the benzene conversion for both fresh catalysts and aged catalyst. The results indicate that not only does the catalyst prepared according the the invention (Example 1) show improved benzene conversion performace at lower temperature when compared to a catalyst not prepared in accordance with embodiments of the invention (Comparative Examples 1 and 2)., but that its performace is more stable over time while in use.

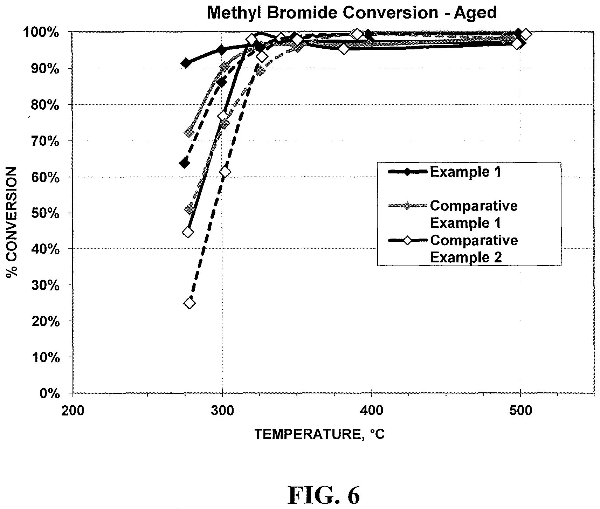

FIG. 6 shows the methyl bromide conversion for both fresh and aged catalyst. The results indicate that not only does the catalyst prepared according the the invention (Example 1) show improved fresh methyl bromide conversion performace at lower temperature when compared to a catalyst not prepared in accordance with embodiments of the invention (Comparative Examples 1 and 2)., but that its aged methyl bromide performance is also imroved as well.

FIGS. 7 and 8 show the benzene conversion and the methyl bromide conversion, respectively,of equivalent base metal catalyst prepared with various ceria and zirconia content in the support. The results illustrate that as the amount of ceria in the catalyst increases, there is a proporitional increase in activity.

FIG. 9 shows the CO, methyl bromide, benzene, and toluene conversions for the catalyst of Example 6. The results indicate that carbon monoxide is fully oxidized by the catalyst of Example 6 at 300°C and above, and that the catalyst fully converts methyl bromide, benzene and toluene at about 350°C and above.

FIGS. 10 and 11 show the methyl bromide and benzene conversion forequivalent base metal catalysts prepared at two different washcoat loadings (Examples 2 and 7). The results illustrate that a catalyst with a higher loading (0.168 g/cm³) (2.75 g/in³)) has better conversion, both fresh and aged,at all temperatures. It also illustrated that the performance of the higher loaded catlayst is more stable over time while in use.

FIGS. 12 and 13 show the benzene and methyl bromide conversion, respectively, of two equivalent base metal catalysts prepared respectively by incipient wetness impregnation, deposition precipitation, and coprecipitation (Examples 2 and 8, and Comparative Example 3). The results indicate that the catalyst prepared by incipient wetness impregnation produces a catalyst material with a higher conversions at every temperature below 500°C compared to the catalyst prepared by co-precipitation. Furthermore, the catalyst prepared by incipient wetness impregnation produces a catalyst material with higher conversions at intermediate temperatures compared to the catalyst prepared by deposition impregnation.

FIGS 14-16 show the CO, benzene and methyl bromide conversion of a Cu/Mn catalyst compared to the performance of each base by itself (Examples 2 and 9 and 10). The results indicate that the CO and benzene conversions are worse when no Cu is present, and that the methyl bromide conversion is worse when no Mn is present. This demonstrates the synergestic benefit of having both base metals present for this application.

FIG. 17 shows the CO, methyl bromide, benzene, and toluene conversions for the catalyst of Example 11 . The results indicate that carbon monoxide is fully oxidized by the catalyst of Example 3 at all temperatures. The catalyst fully converts toluene at 275 °C and above, and fully converts methyl bromide, benzene and temperatures at 400 °C and above.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Furthermore, the particular features, structures, materials, or characteristics may be combined in any suitable manner in one or more embodiments.

Although the invention herein has been described with reference to particular embodiments, it is to be understood that these embodiments are merely illustrative of the principles and applications of the present invention. It will be apparent to those skilled in the art that various modifications and variations can be made to the method and apparatus of the present invention without departing from the scope of the invention. Thus, it is intended that the present invention include modifications and variations that are within the scope of the appended claims.

## Claims

1. A catalyst for the oxidation of a waste stream comprising carbon monoxide (CO), volatile organic compounds (VOCs), and methyl bromide, the catalyst comprising a first base metal catalyst comprising Cu in contact with an oxygen donating support that is substantially free of alumina, whereby substantially free of alumina denotes that there is no alumina intentionally added to the support and there is less than 1% alumina by weight in the oxygen donating support, and at least one second base metal catalyst comprising Mn,
wherein the oxygen donating support is selected from ceria, praseodymia, neodymia, lanthana, yttria, titania, and combinations thereof, wherein the oxygen donating support includes at least 50% by weight of ceria, and
wherein the catalyst comprises from 10-20 wt% CuO and 5-10 wt% MnO.

2. The catalyst of claim 1, wherein the oxygen donating support is selected from ceria or a combination of ceria and titania.

3. The catalyst of claim 1 or 3, wherein the oxygen donating support further comprises zirconia.

4. The catalyst of claim 4, wherein the weight ratio of ceria to zirconia is no less than 4:1.

5. A method of treating a waste stream from a purified terephthalic acid (PTA) process, the method comprising:
contacting a waste stream containing carbon monoxide (CO), volatile organic compounds (VOCs), and methyl bromide with a catalyst comprising a first base metal catalyst comprising Cu in contact with an oxygen donating support that is substantially free of alumina, whereby substantially free of alumina denotes that there is no alumina intentionally added to the support and there is less than 1% alumina by weight in the oxygen donating support, and at least one second base metal catalyst comprising Mn,
wherein the oxygen donating support is selected from ceria, praseodymia, neodymia, lanthana, yttria, titania, and combinations thereof, wherein the oxygen donating support includes at least 50% by weight of ceria, and
wherein the catalyst comprises from 10-20 wt% CuO and 5-10 wt% MnO.

6. The method of claim 5, wherein the oxygen donating support is ceria.

7. A catalytic article for the oxidation of a waste stream comprising carbon monoxide (CO), volatile organic compounds (VOCs), and methyl bromide, the catalytic article comprising a substrate washcoated with a catalyst comprising a first base metal catalyst comprising Cu in contact with an oxygen donating support that is substantially free of alumina, whereby substantially free of alumina denotes that there is no alumina intentionally added to the support and there is less than 1% alumina by weight in the oxygen donating support and a second base metal catalyst comprising Mn,
wherein the oxygen donating support is selected from ceria, praseodymia, neodymia, lanthana, yttria, titania, and combinations thereof, wherein the oxygen donating support includes at least 50% by weight of ceria, and
wherein the catalyst comprises from 10-20 wt% CuO and 5-10 wt% MnO.

8. The catalytic article of claim 7, wherein the washcoat comprises up to 15% by weight alumina.

9. Use of a catalyst comprising
a first base metal catalyst comprising Cu in contact with an oxygen donating support that is substantially free of alumina, and at least one second base metal catalyst comprising Mn,
wherein the oxygen donating support is selected from ceria, praseodymia, neodymia, lanthana, yttria, titania, and combinations thereof, and the oxygen donating support includes at least 50% by weight of ceria,
wherein substantially free of alumina denotes that there is no alumina intentionally added to the support and there is less than 1% alumina by weight in the oxygen donating support, and
wherein the catalyst comprises from 10-20 wt% CuO and 5-10 wt% MnO
for the oxidation of a waste stream comprising carbon monoxide (CO), volatile organic compounds (VOCs), and methyl bromide.

## Patentansprüche

1. Kontaktkatalysator für die Oxidation eines Abfallstroms, der Kohlenmonoxid (CO), flüchtige organische Verbindungen (volatile organic compounds - VOCs) und Brommethyl umfasst, wobei der Kontaktkatalysator einen ersten Basismetallkontaktkatalysator, der Cu in Berührung mit einem sauerstoffabgebenden Träger umfasst, der im Wesentlichen frei von Aluminium ist, wobei im Wesentlichen frei von Aluminium bedeutet, dass dem Träger nicht absichtlich Aluminium zugesetzt wird und weniger als 1 Gew.-% Aluminium in dem sauerstoffabgebenden Träger vorhanden ist, und wenigstens einen zweiten Basismetallkontaktkatalysator umfasst, der Mn umfasst,
wobei der sauerstoffabgebende Träger aus Cerdioxid, Praseodymtrioxid, Neodymoxid, Lanthanoxid, Yttriumoxid, Titandioxid und Kombinationen davon ausgewählt ist, wobei der sauerstoffabgebende Träger wenigstens 50 Gew.-% Ceodioxid beinhaltet, und
wobei der Kontaktkatalysator von 10-20 Gew.-% CuO und 5-10 Gew.-% MnO umfasst.

2. Kontaktkatalysator nach Anspruch 1, wobei der sauerstoffabgebende Träger aus Cerdioxid oder einer Kombination von Cerdioxid und Titandioxid ausgewählt ist.

3. Kontaktkatalysator nach Anspruch 1 oder 3, wobei der sauerstoffabgebende Träger ferner Zirconiumdioxid umfasst.

4. Kontaktkatalysator nach Anspruch 4, wobei das Gewichtsverhältnis von Cerdioxid zu Zirconiumdioxid nicht weniger als 4 : 1 beträgt.

5. Verfahren zum Behandeln eines Abfallstroms aus einem Vorgang für gereinigte Terephthalsäure (purified terephthalic acid - PTA), wobei das Verfahren Folgendes umfasst:
Inberührungbringen eines Abfallstroms, der Kohlenmonoxid (CO), flüchtige organische Verbindungen (VOCs) und Brommethyl enthält, mit einem Kontaktkatalysator, der einen ersten Basismetallkontaktkatalysator, der Cu in Berührung mit einem sauerstoffabgebenden Träger umfasst, der im Wesentlichen frei von Aluminium ist, wobei im Wesentlichen frei von Aluminium bedeutet, dass dem Träger nicht absichtlich Aluminium zugesetzt wird und weniger als 1 Gew.-% Aluminium in dem sauerstoffabgebenden Träger vorhanden ist, und wenigstens einem zweiten Basismetallkontaktkatalysator umfasst, der Mn umfasst, wobei der sauerstoffabgebende Träger aus Cerdioxid, Praseodymtrioxid, Neodymoxid, Lanthanoxid, Yttriumoxid, Titandioxid und Kombinationen davon ausgewählt ist, wobei der sauerstoffabgebende Träger wenigstens 50 Gew.-% Cerdioxid beinhaltet, und wobei der Kontaktkatalysator von 10-20 Gew.-% CuO und 5-10 Gew.-% MnO umfasst.

6. Verfahren nach Anspruch 5, wobei der sauerstoffabgebende Träger Cerdioxid ist.

7. Katalytischer Artikel für die Oxidation eines Abfallstroms, der Kohlenmonoxid (CO), flüchtige organische Verbindungen (VOCs) und Brommethyl umfasst, wobei der katalytische Artikel ein Substrat, das mit einem Washcoat beschichtet ist, mit einem Kontaktkatalysator umfasst, der einen ersten Basismetallkontaktkatalysator, der Cu in Berührung mit einem sauerstoffabgebenden Träger umfasst, der im Wesentlichen frei von Aluminium ist, wobei im Wesentlichen frei von Aluminium bedeutet, dass dem Träger nicht absichtlich Aluminium zugesetzt wird und weniger als 1 Gew.-% Aluminium in dem sauerstoffabgebenden Träger vorhanden ist, und einen zweiten Basismetallkontaktkatalysator umfasst, der Mn umfasst, wobei der sauerstoffabgebende Träger aus Cerdioxid, Praseodymtrioxid, Neodymoxid, Lanthanoxid, Yttriumoxid, Titandioxid und Kombinationen davon ausgewählt ist, wobei der sauerstoffabgebende Träger wenigstens 50 Gew.-% Ceodioxid beinhaltet, und wobei der Kontaktkatalysator von 10-20 Gew.-% CuO und 5-10 Gew.-% MnO umfasst.

8. Katalytischer Artikel nach Anspruch 7, wobei der Washcoat bis zu 15 Gew.-% Aluminium umfasst.

9. Verwendung eines Kontaktkatalysators, der Folgendes umfasst: einen ersten Basismetallkontaktkatalysator, der Cu in Berührung mit einem sauerstoffabgebenden Träger umfasst, der im Wesentlichen frei von Aluminium ist, und wenigstens einen zweiten Basismetallkontaktkatalysator, der Mn umfasst, wobei der sauerstoffabgebende Träger aus Cerdioxid, Praseodymtrioxid, Neodymoxid, Lanthanoxid, Yttriumoxid, Titandioxid und Kombinationen davon ausgewählt ist, und der sauerstoffabgebende Träger wenigstens 50 Gew.-% Cerdioxid beinhaltet, wobei im Wesentlichen frei von Aluminium bedeutet, dass dem Träger nicht absichtlich Aluminium zugesetzt wird und weniger als 1 Gew.-% Aluminium in dem sauerstoffabgebenden Träger vorhanden ist, und wobei der Kontaktkatalysator von 10-20 Gew.-% CuO und 5-10 Gew.-% MnO für die Oxidation eines Abfallstroms umfasst, der Kohlenmonoxid (CO), flüchtige organische Verbindungen (VOCs) und Brommethyl umfasst.

## Revendications

1. Catalyseur pour l'oxydation d'un flux de déchets comprenant du monoxyde de carbone (CO), des composés organiques volatils (COV) et du bromure de méthyle, le catalyseur comprenant un premier catalyseur métallique de base comprenant du Cu en contact avec un support donneur d'oxygène sensiblement exempt d'oxyde d'aluminium, où sensiblement exempt d'oxyde d'aluminium indique qu'il n'y a pas d'oxyde d'aluminium intentionnellement ajouté au support et qu'il y a moins de 1 % d'oxyde d'aluminium en poids dans le support donneur d'oxygène, et au moins un second catalyseur métallique de base comprenant du Mn,
le support donneur d'oxygène étant choisi parmi l'oxyde de cérium, l'oxyde de praséodyme, l'oxyde de néodyme, l'oxyde de lanthane, l'oxyde d'yttrium, l'oxyde de titane, et des combinaisons de ceux-ci, le support donneur d'oxygène comportant au moins 50 % en poids d'oxyde de cérium, et
le catalyseur comprenant de 10 à 20 % en poids de CuO et 5 à 10 % en poids de MnO.

2. Catalyseur selon la revendication 1, le support donneur d'oxygène étant choisi parmi l'oxyde de cérium ou une combinaison d'oxyde de cérium et d'oxyde de titane.

3. Catalyseur selon la revendication 1 ou 3, le support donneur d'oxygène comprenant en outre de l'oxyde de zirconium.

4. Catalyseur selon la revendication 4, le rapport en poids de l'oxyde de cérium à l'oxyde de zirconium n'étant pas inférieur à 4:1.

5. Procédé de traitement d'un flux de déchets provenant d'un procédé d'acide téréphtalique purifié (ATP), le procédé comprenant :
la mise en contact d'un flux de déchets contenant du monoxyde de carbone (CO), des composés organiques volatils (COV) et du bromure de méthyle avec un catalyseur comprenant un premier catalyseur métallique de base comprenant du Cu en contact avec un support donneur d'oxygène sensiblement exempt d'oxyde d'aluminium, où sensiblement exempt d'oxyde d'aluminium indique qu'il n'y a pas d'oxyde d'aluminium intentionnellement ajouté au support et qu'il y a moins de 1 % en poids d'oxyde d'aluminium dans le support donneur d'oxygène, et au moins un second catalyseur métallique de base comprenant du Mn,
le support donneur d'oxygène étant choisi parmi l'oxyde de cérium, l'oxyde de praséodyme, l'oxyde de néodyme, l'oxyde de lanthane, l'oxyde d'yttrium, l'oxyde de titane, et des combinaisons de ceux-ci, le support donneur d'oxygène comportant au moins 50 % en poids d'oxyde de cérium, et
le catalyseur comprenant de 10 à 20 % en poids de CuO et 5 à 10 % en poids de MnO.

6. Procédé selon la revendication 5, le support donneur d'oxygène étant de l'oxyde de cérium.

7. Article catalytique destiné à l'oxydation d'un flux de déchets comprenant du monoxyde de carbone (CO), des composés organiques volatils (COV) et du bromure de méthyle, l'article catalytique comprenant un substrat doté d'un revêtement catalytique par un catalyseur comprenant un premier catalyseur métallique de base comprenant du Cu en contact avec un support donneur d'oxygène sensiblement exempt d'oxyde d'aluminium, où sensiblement exempt d'oxyde d'aluminium indique qu'il n'y a pas d'oxyde d'aluminium intentionnellement ajouté au support et qu'il y a moins de 1 % d'oxyde d'aluminium en poids dans le support donneur d'oxygène et un second catalyseur métallique de base comprenant Mn,
le support donneur d'oxygène étant choisi parmi l'oxyde de cérium, l'oxyde de praséodyme, l'oxyde de néodyme, l'oxyde de lanthane, l'oxyde d'yttrium, l'oxyde de titane, et des combinaisons de ceux-ci, le support donateur d'oxygène comportant au moins 50 % en poids d'oxyde de cérium, et
le catalyseur comprenant de 10 à 20 % en poids de CuO et 5 à 10 % en poids de MnO.

8. Article catalytique selon la revendication 7, le revêtement catalytique comprenant jusqu'à 15 % en poids d'oxyde d'aluminium.

9. Utilisation d'un catalyseur comprenant
un premier catalyseur métallique de base comprenant du Cu en contact avec un support donneur d'oxygène qui est sensiblement exempt d'oxyde d'aluminium, et au moins un second catalyseur de métal base comprenant du Mn,
le support donneur d'oxygène étant choisi parmi l'oxyde de cérium, l'oxyde de praséodyme, l'oxyde de néodyme, l'oxyde de lanthane, l'oxyde d'yttrium, l'oxyde de titane, et des combinaisons de ceux-ci, et le support donneur d'oxygène comprenant au moins 50 % en poids d'oxyde de cérium,
sensiblement exempt d'oxyde d'aluminium indiquant qu'il n'y a pas d'oxyde d'aluminium ajouté intentionnellement au support et qu'il y a moins de 1 % d'oxyde d'aluminium en poids dans le support donneur d'oxygène, et
le catalyseur comprenant de 10 à 20 % en poids de CuO et de 5 à 10 % en poids de MnO pour l'oxydation d'un flux de déchets comprenant du monoxyde de carbone (CO), des composés organiques volatils (COV), et du bromure de méthyle.
